# EUROPEAN PATENT SPECIFICATION

(11) **EP 0 587 894 B1**
(45) Date of publication and mention of the grant of the patent: **15.10.1997**
(21) Application number: 92917709.5
(22) Date of filing: 28.07.1992
(51) Int. Cl.: A01D 45/00

(54) **VEGETABLE HARVESTING COMBINE**
GEMÜSE-ERNTEMASCHINE
MACHINE DE RECOLTE DE LEGUMES

(30) Priority: 12.11.1991 SU 5008499
(43) Date of publication of application: 23.03.1994
(73) Proprietor: Tarasenko, Vladimir V., Melitopol, 332313 (UA); Kindzersky, Vasily Vasilievich, Beltsy, 279200 (MD)
(72) Inventor: Tarasenko, Vladimir V., Melitopol, 332313 (UA); Kindzersky, Vasily Vasilievich, Beltsy, 279200 (MD)
(74) Representative: Patentanwälte Zellentin & Partner
(86) International application number: RU9200144
(87) International publication number: WO9309661

(56) References cited:
- FR-A- 2 560 736
- SU-A- 519 159
- SU-A- 753 343
- SU-A- 1 625 407
- US-A- 3 199 604
- US-A- 3 511 038
- US-A- 3 566 881
- US-A- 3 613 796
- US-A- 3 666 017
- US-A- 3 855 764
- US-A- 4 261 163

## Description

A combine for harvesting vegetables such as tomatoes, eggplants and peppers is known from V. V. Kindzerskii, V. V. Tarasenko: "New constructions of combines for harvesting tomatoes" in "Mechanization and electrification of agriculture" No. 11, 1990, Moscow; p. 59. The combine comprises a main frame, a cutting device to cut off the vines, an elevator for transporting the cut mass consisting of vegetables, vines and admixture and a separation mechanism to separate the vegetables from the cut mass.

Said separation mechanism is mounted behind the elevator and divides the cut mass into two independent flows. The first flow consists of loose vegetables and admixtures and the second flow consists of vines with vegetables.

There is also a final transporter close to the separating mechanism for all the separated vegetables.

The separating mechanism consists of two key-type separators. Using them reduces the degree of damage of vegetables a little in comparison with other known combines. The vegetables, harvested by these combines, are damaged often enough because inertial and percussion forces influence them more intensively. Besides there are very high losses.

FR-A-25 60 736 discloses a combine for harvesting tomatoes with a frame comprising a rotating drum with protruding fingers acting as collecting combs and bringing loose tomatoes without and with parts of vines to an elevator, which elevator brings the tomatoes and the vine to a separation device with an endless screenbelt which may cooperate with two rotating drums with protruding fingers to eleminate the vine from the combine, which drums are arranged in such a manner that the axis of rotation of the second drum is placed higher than the first one.

US-A-4 261 163 discloses a rotating drum with protruding fingers, which fingers may be retracted into the drum to protect them for coming into contact with the field.

The main task of the invention is to create a combine for harvesting vegetables in which the process of separation would be based on simultaneous using of inertial and percussion influences and which is able to separate vegetables irrespective of the degree of their ripeness.

According to the invention a combine for harvesting vegetables such as tomatoes, eggplants and peppers is suggested comprising fixed to a main frame a cutting device to cut off the vines, an elevator for transporting the cut mass consisting of vegetables, vines and admixture from the cutting device to a separation mechanism mounted behind the elevator to divide the cut mass into two independent flows, the separation mechanism including a drum with protruding fingers arranged with a clearance, sized according to the length of the fingers, with respect to the elevator and a transporter below the clearance, the arrangement being such that the first flow consisting of loose vegetables and admixtures falls through the clearance onto the transporter and the second flow consisting of vines with vegetables is moved by the drum to a device to separate the vegetables from the vine, said device including two or more rotation drums with protruding fingers, the axis of rotation of each following drum being placed higher than the axis of rotation of each previous drum and each rotating drum being hollow with a cavity, wherein a mechanism for changing the length of protrusion of the fingers relative to the surface of each drum is placed, the combine further comprising a final transporter for all the separated vegetables.

Advantageous constructions of the combine are disclosed in the subclaims.

The combine according to the invention has a high coefficient of separation and this factor increases its output especially when vegetables with different degrees of ripeness are harvested.

Below the invention will be explaned in accordance with drawings. It shows:
- Fig. 1: a principle scheme of a combine harvesting vegetables according to the invention; drawn in axonometry;
- Fig. 2: a separating device according to the invention;
- Fig. 3: a rotating drum of the separating device according to the invention; longitudinal section;
- Fig. 4: the section of the drum along line IV-IV of fig. 3;
- Fig. 5: a variant of a separating device supplied with a pressing unit in form of a shield;
- Fig. 6: a variant of a separating device, supplied with a pressing unit in form of a slotted plate;
- Fig. 7: a shield of the pressing unit according to the invention;
- Fig. 8: a variant of a shield of the pressing unit according to the invention;
- Fig. 9: a slotted plate according to the invention;
- Fig. 10: a variant of a slotted plate according to the invention;
- Fig. 11: a protruding finger of the last rotating drum; section along line XI-XI of fig. 6.

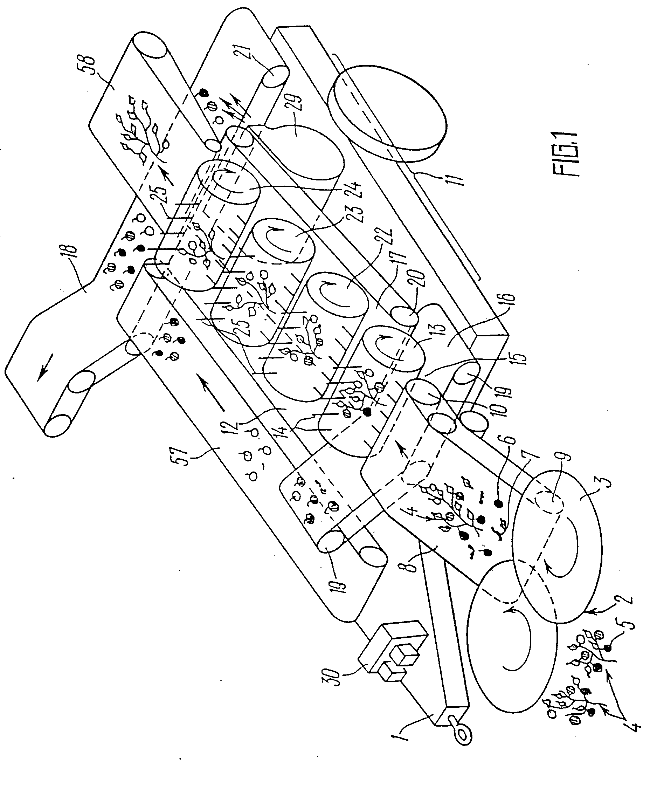

The described combine is used for the harvesting of vegetables like tomatoes, eggplants and peppers. It comprises a main frame 1 (fig. 1), where the devices and units of the combine are placed in succession given below. There is a cutting device 2, which consists of two cutting discs 3. These discs 3 rotate in opposite directions. They cut and catch the vines 4 with vegetables 5 and loose vegetables 6 and admixtures 7, including clods and other things. The cutting device 2 may be made as a rodweeder or a sickle, providing the implementation of the same functions is guaranteed.

An elevator 8 is placed behind the cutting device 2. It transports the cut mass, including the vines 4 with vegetables 5, loose vegetables 6 and admixtures 7 and is a transporter with two axes 9 and 10. The angle of elevator's pitch at its beginning, near the discs 3, is bigger than at its end.

A separation mechanism to separate the vegetables 5 from cut mass is placed behind the elevator 8. It contains the device 11 to separate the vegetables from the vine 4.

The separation mechanism includes a rotating drum 13 with numerous protruding fingers 14 on the drum's cylinder surface. There is a clearance 15 between elevator 8 and drum 13. Its size depends on the length of the fingers 14 of the drum 13. The separation mechanism provides the division of the cut mass into two independent flows. One of them consists of the loose vegetables 6 and admixtures 7 and comes through the clearance 15 to a transporter 16. The other one, consisting of vines 4 and vegetables 5 on it, is catched by the fingers 14 of the drum 13 and transported to the device 11 to separate the vegetables 5 from the vines 4. A transporter 17 placed below the device 11, serves for transportation of separated vegetables 5. Final receiving transporter 18 is placed behind the separation mechanism 11.

All transporters 16-18 have their own axes of rotation 19, 20 and 21.

Device 11 to separate vegetables 5 from the vines 4 consists of at least two rotating drums. Three drums 22, 23, 24 are shown in fig. 1. Each of them has protruding fingers 25 on its cylinder surface. The drums 22-24 are fixed on the frame 1 one after another along the movement of the vines 4 with vegetables 5.

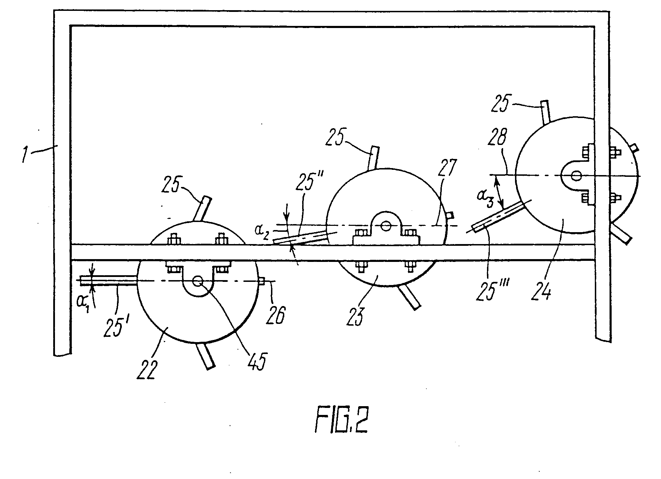

The axis 26 (fig. 2) of rotation of the first drum 22 is placed lower than the axis 27 of rotation of the second drum 23. In short, all axes 27 (28) of rotation of each following drum 23 (24) are placed higher than the axis 26 (27) of rotation of each previous drum 22 (23).

Such disposition of the drums 22-24 increases the rise of the vines 4 (fig. 1) and increases the force of influence on them. This force consists of inertial-percussion force and the force of combing the vines 4.

There is a fan 29, which is placed on the frame 1 close to the final transporter 18. On the frame 1 there is also a driving mechanism 30 for creation of rotation and movement of all units of the combine.

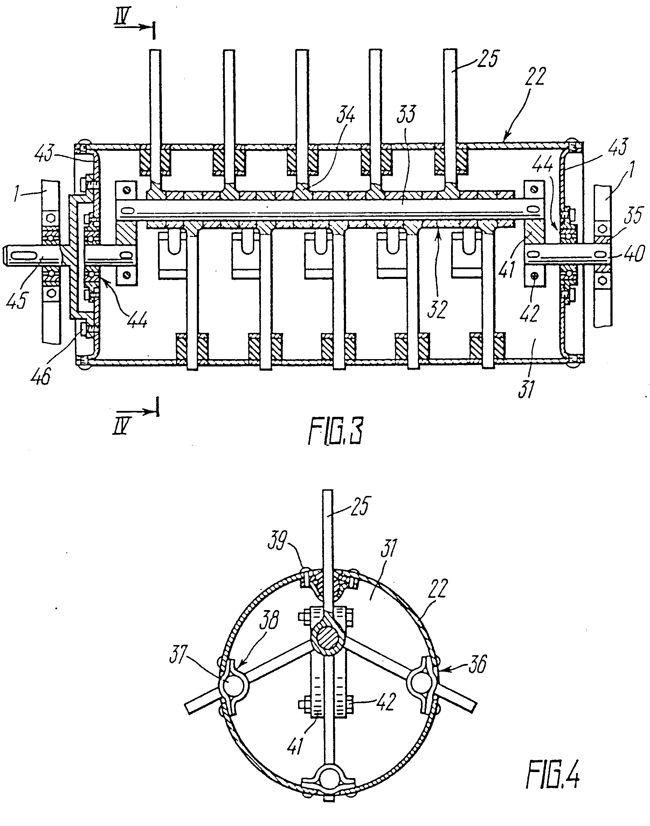

The rotating drums 22, 23, 24; (13) shown in figures 3 and 4, are made hollow. A mechanism for changing the length of protrusion of their fingers 25 (14) is placed in its cavity 31. The protruding fingers 25 (14) (fig. 3, 4) move on the compound trajectory with a changing angular acceleration.

As a result, the inertial-percussion force influences the vines 4 and provides the vegetables separation as well.

The mechanism for changing the length of protrusion of the fingers 25 (14) may be made pneumatic or electric. But the following performed variant is the simplest. The group of fingers 25 is connected with a bellcrank 33 of a crankshaft 32. The fixed tip of each fingers 25 is supplied with a collar 34, serving as a hinge. The crankshaft 32 is placed in a case 35, which is situated on the frame 1. It is immovable. Each finger 25 moves through a hole 36 (fig. 4) in the surface of the drum 22-24 (13). The collar 37 is fixed in the hole 36 with the help of a ferrule 38 and screws 39.

The bellcranks 33 and 40 (fig. 3) of the crankshaft 32 are fixed in iron rings 41 with the help of fixing elements 42.

There are two covers 43 of the case 35 of the drum 22. The drum is fixed in two bearings 44 and its shaft 45 is fixed on one of the covers 43 with screws 46.

The best disposition of the drums 22-24 of the device 11 (fig. 1) is shown in fig. 2. As it can be seen from fig. 2, the angle between the horizon and the direction of maximum protrusion of the fingers changes from each previous drum (22; 23) to the following one (23; 24). So, for example, the angle α₁ between the horizon and the maximum protrusion of the finger 25' of the drum 22 is less than angle α₂, corresponding to the finger 25'' of the drum 23, and the angle α₃, corresponding to the finger 25''' of the drum 24 is bigger than the angle α₂. The length of all protruding fingers may be equal.

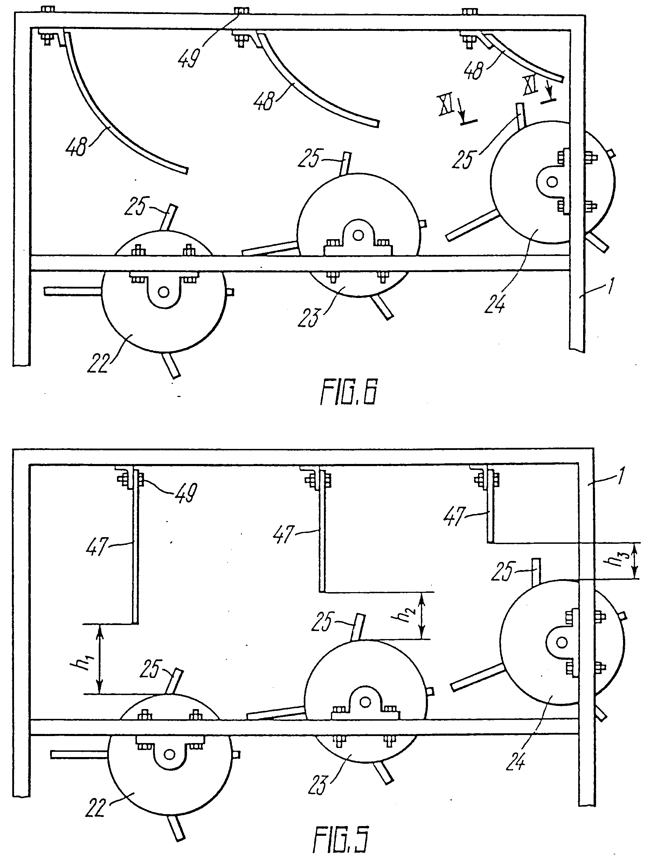

The device 11 (fig. 1) also contains pressing units to press the vines 4 with vegetables 5. These units may be made in accordance with fig. 5 and fig. 6 as shields 47 (fig. 5), placed vertically near the drums 22-24, or as curved slotted plates 48 (fig. 6).

The pressing units forms the flow of cut mass with determined parameters. They are fixed over the drums 22-24 (fig. 5) so, that the space h₁ over the drum 22 is bigger than the space h₂ over the drum 23 and the space h₂ is bigger than the space h₃ over the drum 24. In short, the space h, changing from the first drum 22 to the last one 24, decreases the thickness of the flow of cut mass. It increases the efficiency of separators's work.

The shields 47 (fig. 5) are fixed on the frame 1 with bolts 49.

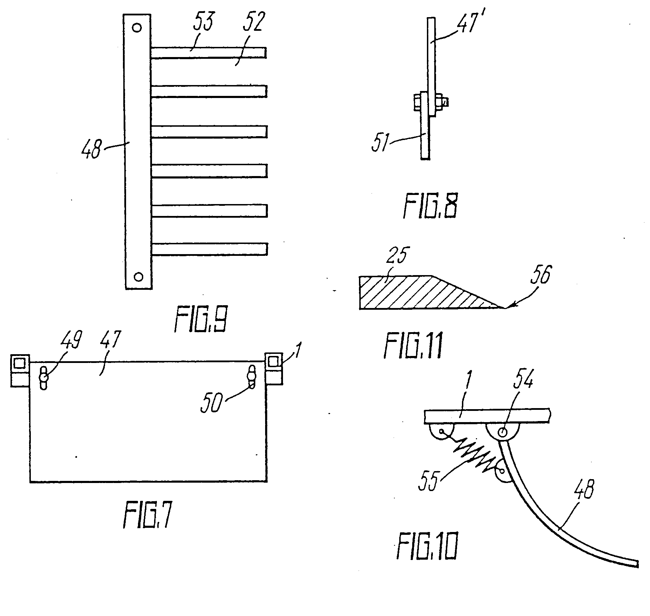

There are slots 50 (fig. 7) made in the shields 47 (fig. 5) for possible regulating the space between the shield 47 and the case of the corresponding drum 22-24. It permits to move the shield 47 up and down. The bottomend of the shield 47 may be elastic. As it is shown in fig. 8, there is an elastic element 51, fixed in the lower part of the shield 47'.

The slotted plates 48 (fig. 6, 9) are placed so that its slots 52 between the teeth 53 of the comb are directed to the surface of the corresponding drums 22-24 and provide the best conditions of combing.

The plates 48 (fig. 6) are fixed on the frame 1 rapidely. In another variant they are fixed by a hinge 54 (fig. 10) and supplied with a spring 55.

The fingers 25 of the last rotating drum 24 (fig. 1) of the device 11 have cutting edges 56 (fig. 10). Thanks to this fact the vines 4 are cut and put outside the combine.

The combine works as follows. During the movement along a field, the cutting device 2 (fig. 1) cuts and picks up the top stratum of the soil, the vines 4 and loose vegetables. Small admixtures are screened through the space between the rods of the elevator 8. Behind the elevator 8 the cut mass is separated into two flows.

Loose vegetables, small admixtures and clods (the first flow) move through the clearance 15 between the elevator 8 and the drum 13 to the transporter 16 and further to the final receiving transporter 18 with the help of a transporter 57. The vines 4 with vegetables 5 (the second flow) are catched by the fingers 14 of the drum 13 and fed to the device 11. The force of influence on the vines with vegetables increases with increasing of their rise when they move from the first drum 22 to the last one 24. The degree of influence depends on the speed of rotation of each next drum 23, 24 the changing of the angle α and the space (h) between the drums and the pressing units.

The fingers 25 of the drum 22 pick up the vines and carry them over the drum 22. The circuit speed of the fingers 25 increases before the top phase of their protrusion. It causes a sharp strain of the vines and the separation of the vegetables.

Then the angular speed of the fingers 25 decreases according to their length of protrusion. The reeling of the vines is impossible due to the full immersion of the fingers into the drum's case. Thanks to all these conditions the vegetables 5 are separated from the vines and fall down on the transporter 17. The main part of the separated vegetables consists of red, pink and brown tomatoes. There are also some green ones.

The vines 4 with unseparated vegetables are caught by the fingers 25 of the next drum 23, which has a higher frequency of rotation than the drum 22. The angle α₂ of the maximum protrusion of fingers 25 is bigger than the angle α₃ corresponding to the drum 22. All the drums have the same principle of work.

The rest vines are cut by the fingers 25 of the last drum 24 and are put outside the combine by a transporter 57 (fig. 1).

The pressing units permit to hold the cut mass close to the drums 22-24. The difference between the first speed of the flow and the circuit speed of the fingers 25 increases during crossing the drums by the flow. The shields 47 or the plates 48 make even the trajectory of movement of the cut mass.

The vegetables, separated from the vine 4 by the first drum 22, fall down through the clearance between the drum's fingers on the longitudinal transporter 17. An air stream, made by the fan 29 blows through the mass when it falls down from the transporter 17 on the final transporter 18. The special construction of the fan's 29 housing provides the suction of small admixtures through the rods of transporter 17.

In the case of harvesting vines with small quantity of vegetables or in the case of incoming of gross vines or gross weeds the spring 54 (fig. 9) is straining, the plate 48 is turning on the hinge 53 and rising above the last drum 24.

This described combine for harvesting vegetables like tomatoes, eggplants and peppers has high productivity and reliability and provides the fullfilment of the technological process with high enough indices of work of each combine's part.

Moving through the separating device, the cut mass changes its volume and thickness. Separated vegetables fall down through the clearances between the drums. That is why decreasing of the clearances between the drums and plates or shields in the direction of output permits to hold up the mass near the next drum. It provides the best combing (stroke) of the vines. Most of all, the damage of separated vegetables decrease in the combine. It is provided by multi-step divided influence on the vines with vegetables.

The efficiency of separation is also very high. It forms 96% for tomatoes (damage no more than 2%) and 86% for peppers (damage no more than 7%).

The role of manual labour is considerably decreased. The losses are within the permissible limits.

## Claims

1. Combine for harvesting vegetables such as tomatoes, eggplants and peppers comprising fixed to a main frame (1) a cutting device (2) to cut off the vines (4), an elevator (8) for transporting the cut mass consisting of vegetables (5, 6), vines (4) and admixture (7) from the cutting device (2) to a separation mechanism mounted behind the elevator (8) to divide the cut mass into two independent flows, the separation mechanism including a drum (13) with protruding fingers (14) arranged with a clearance (15), sized according to the length of the fingers (14), with respect to the elevator (8) and a transporter (16) below the clearance (15), the arrangement being such that the first flow consisting of loose vegetables (6) and admixtures (7) falls through the clearance (15) onto the transporter (16) and the second flow consisting of vines (4) with vegetables (5) is moved by the drum (13) to a device (11) to separate the vegetables (5) from the vine (4), said device (11) including two or more rotating drums (22-24) with protruding fingers (25), the axis of rotation of each following drum (23, 24) being placed higher than the axis of rotation of each previous drum (22; 23) and each rotating drum (22-24) being hollow with a cavity (31), wherein a mechanism for changing the length of protrusion of the fingers (25) relative to the surface of each drum (22-24) is placed, the combine further comprising a final transporter (18) for all the separated vegetables (5, 6).

2. Combine according claim 1 characterized in that the mechanism for changing the length of protrusion of each protruding finger (25) is a crank (32) fixed on the frame (1) and connected by means of a hinge with each of the protruding fingers (25).

3. Combine according to claim 1 or 2 characterized in that each following rotating drum (23, 24) is placed relatively to its previous drum (22) with an angle between the horizon and the direction of protrusion of the protruding fingers (25) at their maximum protrusion, which angle is changed from each rotating drum (22; 23) to the following drum (23, 24).

4. Combine according to one of claims 1 to 3 characterized in that the length of protrusion of the fingers (25) of all rotating drums (22-24) is the same.

5. Combine according to one of claims 1 to 4 characterized in that the device (11) to separate the vegetables (5) from the vine (4) contains a pressing unit to press the vine (4) with vegetables (5) in direction of the rotating drums (22-24), which is placed over the rotating drums (22-24) to form the cut mass flow according to the necessary size for the following treatment.

6. Combine according to claim 5 characterized in that the pressing unit is placed in a way that the distance (h) from the surface of each rotating drum (22-24) to the press unit is decreased from each previous rotating drum (22; 23) to the following drum (23; 24).

7. Combine according to claim 5 or 6 characterized in that the distance between the pressing unit and the corresponding rotating drums (22-24) is adjustable.

8. Combine according to one of the claims 5 to 7 characterized in that the pressing unit contains at least one shield (47), placed adjacent to the corresponding rotating drum (22-24).

9. Combine according to one of the claims 5 to 7 characterized in that the pressing unit contains a slotted plate (48), placed at least over one rotating drum (22-24).

10. Combine according to claim 8 characterized in that the bottom of at least one shield (47) is made elastic.

11. Combine according to claim 9 characterized in that each slotted plate (48) is fixed on the main frame (1) by means of a hinge (54) and is connected with a spring (55).

12. Combine according to one of claims 1 to 11 characterized in that each of the protruding fingers (25) of the last rotating drum (24) has a cutting edge (56).

13. Combine according to one of claims 2 to 12 characterized in that the radius of the crank (32) is increased in at least one of the drums (22-24).

## Patentansprüche

1. Erntemaschine für Gemüse wie Tomaten, Auberginen und Paprika, enthaltend eine an einem Hauptrahmen (1) befestigte Schneideinrichtung (2) zum Abschneiden der Stengel (4), eine Hebeeinrichtung (8) zum Transportieren der aus Gemüse (5, 6), Stengel (4) und Beimengung (7) bestehenden Schneidmasse von der Schneideinrichtung (2) zu einem hinter der Hebeeinrichtung (8) angebrachten Trennmechanismus zum Trennen der Schneidmasse in zwei unabhängige Ströme, wobei der Trennmechanismus eine Trommel (13) mit hervorstehenden Fingern (14) enthält, die mit einem Abstand (15) von der Hebeeinrichtung (8) angeordnet sind, der entsprechend der Länge der Finger (14) bemessen ist, und einer Transporteinrichtung (16) unterhalb des Abstandes (15), wobei die Anordnung derart ist, daß der aus losem Gemüse (6) und Beimengung (7) bestehende erste Strom durch den Abstand (15) auf die Transporteinrichtung (16) fällt und der aus Stengeln (4) mit Gemüse (5) bestehende zweite Strom von der Trommel (13) zu einer Einrichtung (11) bewegt wird, die das Gemüse (5) von den Stengeln (4) trennt, wobei die Einrichtung (11) zwei oder mehrere rotierende Trommeln (22-24) mit hervorstehenden Fingern (25) enthält, die Rotationsachse jeder folgenden Trommel (23; 24) höher angeordnet ist wie die Rotationsachse jeder vorhergehenden Trommel (22; 23) und jede rotierende Trommel (22-24) mit einem Hohlraum (31) hohl ausgebildet ist, wobei ein Mechanismus zum Verändern der hervorstehenden Länge der Finger (25) relativ zu der Oberfläche jeder Trommel (22-24) vorgesehen ist und wobei die Erntemaschine desweiteren eine letzte Transporteinrichtung (18) für alle getrennten Gemüse (5, 6) aufweist.

2. Erntemaschine nach Anspruch 1, dadurch gekennzeichnet, daß der Mechanismus zum Verändern der hervorstehenden Länge jedes hervorstehenden Fingers (25) eine Kurbel (32) ist, die an dem Rahmen (1) befestigt ist und mittels eines Gelenks mit jedem der hervorstehenden Finger(25) verbunden ist.

3. Erntemaschine nach Anspruch 1 oder 2, dadurch gekennzeichnet, daß jede nachfolgende rotierende Trommel (23, 24) bezüglich ihrer vorhergehenden Trommel (22) mit einem Winkel zwischen der Horizontalen und der Vorstehrichtung der vorstehenden Finger (25) in ihrer maximalen Vorstehstellung angeordnet ist, wobei der Winkel von jeder rotierenden Trommel (22; 23) zu der folgenden Trommel (23, 24) verändert ist.

4. Erntemaschine nach einem der Ansprüche 1 bis 3, dadurch gekennzeichnet, daß die hervorstehende Länge der Finger (25) aller rotierenden Trommeln (22-24) gleich ist.

5. Erntemaschine nach einem der Ansprüche 1 bis 4, dadurch gekennzeichnet, daß die Einrichtung (11) zum Trennen der Gemüse (5) von den Stengeln (4) eine Preßeinheit enthält, um den Stengel (4) mit Gemüse (5) in Richtung zu den rotierenden Trommeln (22-24) zu pressen, die über den rotierenden Trommeln (22-24) angeordnet sind, um den Schnittgutstrom gemäß der erforderlichen Größe für die nachfolgende Behandlung zu bilden.

6. Erntemaschine nach Anspruch 5, dadurch gekennzeichnet, daß die Preßeinheit derart angeordnet ist, daß der Abstand (h) von der Oberfläche jeder rotierenden Trommel (22-24) zur Preßeinheit von jeder vorhergehenden rotierenden Trommel (22; 23) zu der nachfolgenden Trommel (23; 24) verringert ist.

7. Erntemaschine nach Anspruch 5 oder 6, dadurch gekennzeichnet, daß der Abstand zwischen der Preßeinheit und der entsprechenden rotierenden Trommeln (22-24) einstellbar ist.

8. Erntemaschine nach einem der Ansprüche 5 bis 7, dadurch gekennzeichnet, daß die Preßeinheit zumindest ein Schild (47) aufweist, das benachbart zu der entsprechenden rotierenden Trommel (22-24) angeordnet ist.

9. Erntemaschine nach einem der Ansprüche 5 bis 7, dadurch gekennzeichnet, daß die Preßeinheit eine geschlitzte Platte (48) enthält, die zumindest über einer rotierenden Trommel (22-24) angeordnet ist.

10. Erntemaschine nach Anspruch 8, dadurch gekennzeichnet, daß das Unterende von zumindest einem Schild (47) elastisch ist.

11. Erntemaschine nach Anspruch 9, dadurch gekennzeichnet, daß jede geschlitzte Platte (48) an dem Hauptrahmen (1) mittels eines Gelenks (54) befestigt ist und mit einer Feder (55) verbunden ist.

12. Erntemaschine nach einem der Ansprüche 1 bis 11, dadurch gekennzeichnet, daß jeder der hervorstehenden Finger (25) der letzten rotierenden Trommel (24) eine Schneidkante (56) aufweist.

13. Erntemaschine nach einem der Ansprüche 2 bis 12, dadurch gekennzeichnet, daß der Radius der Kurbel (32) bei zumindest einer der Trommeln (22-24) vergrößert ist.

## Revendications

1. Moissonneuse-batteuse pour la récolte de légumes, par exemple de tomates, d'aubergines et de poivrons, comprenant un dispositif de coupe (2) fixé à un cadre principal (1), destiné à couper les fanes (4), un élévateur (8) pour transporter la masse coupée, composée de légumes (5, 6), de fanes (4) et d'autres matières (7), du dispositif de coupe (2) vers un mécanisme de séparation, monté derrière l'élévateur (8), pour diviser la masse coupée en deux flux indépendants, le mécanisme de séparation englobant un tambour (13) avec des doigts en saillie (14), agencés à un espacement (15) dimensionné en fonction de la longueur des doigts (14) par rapport à l'élévateur (8), et un convoyeur (16) au-dessous de l'espacement (15), l'agencement étant tel que le premier flux composé de légumes en vrac (6) et d'autres matières (7) tombe à travers l'espacement (15) sur le convoyeur (16), le deuxième flux, composé de fanes (4) et de légumes (5) étant transféré par le tambour (13) vers un dispositif (11) destiné à séparer les légumes (5) des fanes (4), ledit dispositif (11) englobant deux ou plusieurs tambours rotatifs (22-24) avec des doigts en saillie (25), l'axe de rotation de chaque tambour suivant (23, 24) étant placé en un point plus élevé que l'axe de rotation de chaque tambour précédent (22; 23), et chaque tambour rotatif (22-24) étant creux et comportant une cavité (31), dans laquelle est agencé un mécanisme destiné à changer la longueur de la saillie des doigts (25) par rapport à la surface de chaque tambour (22-24), la moissonneuse-batteuse comprenant en outre un convoyeur final (18) pour tous les légumes séparés (5, 6).

2. Moissonneuse-batteuse selon la revendication 1, caractérisée en ce que le mécanisme destiné à changer la longueur de la saillie de chaque doigt en saillie (25) est une manivelle (32) fixée sur le cadre (1) et connectée par l'intermédiaire d'une charnière à chacun des doigts en saillie (25).

3. Moissonneuse-batteuse selon les revendications 1 ou 2, caractérisée en ce que chaque tambour rotatif suivant (23, 24) est agencé par rapport à son tambour précédent (22) de sorte à former un angle entre l'horizon et la direction de la saillie des doigts en saillie (25) au niveau de leur saillie maximale, cet angle étant changé entre chaque tambour rotatif (22; 23) et le tambour suivant (23, 24).

4. Moissonneuse-batteuse selon l'une des revendications 1 à 3, caractérisée en ce que la longueur de la saillie des doigts (25) de tous les tambours rotatifs (22-24) est la même.

5. Moissonneuse-batteuse selon l'une des revendications 1 à 4, caractérisée en ce que le dispositif (11) destiné à séparer les légumes (5) des fanes (4) contient une unité de pression pour presser les fanes (4) avec les légumes (5) en direction des tambours rotatifs (22-24), cette unité étant agencée au-dessus des tambours rotatifs (22-24) pour former le flux de la masse coupée en fonction des dimensions nécessaires en vue du traitement suivant.

6. Moissonneuse-batteuse selon la revendication 5, caractérisée en ce que l'unité de pression est agencée de sorte que la distance (h) entre la surface de chaque tambour rotatif (22-24) et l'unité de pression est réduite de chaque tambour rotatif précédent (22; 23) vers le tambour suivant (23; 24).

7. Moissonneuse-batteuse selon les revendications 5 ou 6, caractérisée en ce que la distance entre l'unité de pression et les tambours rotatifs correspondants (22-24) peut être ajustée.

8. Moissonneuse-batteuse selon l'une des revendications 5 à 7, caractérisée en ce que l'unité de pression contient au moins un écran (47) agencé près du tambour rotatif correspondant (22-24).

9. Moissonneuse-batteuse selon l'une des revendications 5 à 7, caractérisée en ce que l'unité de pression contient une plaque à fente (48) agencée au moins au-dessus d'un tambour rotatif (22-24).

10. Moissonneuse-batteuse selon la revendication 8, caractérisée en ce que le fond d'au moins un écran (47) est rendu élastique.

11. Moissonneuse-batteuse selon la revendication 9, caractérisée en ce que chaque plaque à fente (48) est fixée sur le cadre principal (1) par l'intermédiaire d'une charnière (54) et est connectée par un ressort (55).

12. Moissonneuse-batteuse selon l'une des revendications 1 à 11, caractérisée en ce que chacun des doigts en saillie (25) du dernier tambour rotatif (24) comporte un bord tranchant (56).

13. Moissonneuse-batteuse selon l'une des revendications 2 à 12, caractérisée en ce que le rayon de la manivelle (32) est accru, du moins dans l'un des tambours (22-24).
